(19) Europäisches Patentamt
European Patent Office
Office européen des brevets

(11) Publication number: **0 381 184 B1**

(12) **EUROPEAN PATENT SPECIFICATION**

(45) Date of publication of patent specification: **10.11.93**

(51) Int. Cl.$^5$: **C08F 4/642**, C08F 10/00

(21) Application number: **90101892.9**

(22) Date of filing: **31.01.90**

(54) **Catalysts for the polymerization of olefins.**

(30) Priority: **31.01.89 IT 1925289**

(43) Date of publication of application:
**08.08.90 Bulletin 90/32**

(45) Publication of the grant of the patent:
**10.11.93 Bulletin 93/45**

(84) Designated Contracting States:
**AT BE DE ES FR GB IT NL SE**

(56) References cited:
**EP-A- 0 129 368**

**PATENT ABSTRACTS OF JAPAN, vol. 12, no. 444 (C-545)[3291], 22nd November 1988; & JP-A 63 168 408 (SHOWA DENKO K.K.) 12-07-1988**

**JOURNAL OF POLYMER SCIENCE/PART A: POLYMER CHEMISTRY, vol. 26, no. 11, October 1988, pages 3089-3102, John Wiley & Sons, Inc., New York, NY, US; J.C.W. CHIEN et al.: "Metallocene-methylaluminoxane catalysts for olefin polymerization. I. Trimethylaluminum as coactivator"**

(73) Proprietor: **AUSIMONT S.r.l.**
**Foro Buonaparte, 31**
**I-20100 Milano(IT)**

Proprietor: **Himont Incorporated**
**2801 Centerville Road**
**New Castle County Delaware(US)**

Proprietor: **Montedison S.p.A.**
**31, Foro Buonaparte**
**I-20121 Milan(IT)**

(72) Inventor: **Resconi, Luigi, Dr.**
**Via A. Doria 14**
**I-20124 Milano(IT)**
Inventor: **Giannini, Umberto, Dr.**
**53, Via Sismondi**
**I-20133 Milano(IT)**
Inventor: **Albizzati, Enrico**
**64, Via Roma**
**I-28041 Arona, Novara(IT)**

(74) Representative: **Zumstein, Fritz, Dr. et al**
**Dr. F. Zumstein**
**Dipl.-Ing. F. Klingseisen**
**Bräuhausstrasse 4**
**D-80331 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 381 184 B1

## Description

The present invention relates to catalysts for the polymerisation of olefins, obtained from zirconocenic compounds and from alkyl-Al compounds.

It is known how to polymerize ethylene by using catalysts obtained from zirconocenes and from trialkyl aluminum. The zirconocenes used in the known art can be represented by to the general formula:

(A) $(C_5R_nH_{5-n})_2ZrX_2$

where R is an alkyl with 1 to 8 C-atoms, n may be 0 or 1 or 2 and X may be a halogen atom, an alkoxy group or the anion of an organic or inorganic acid.

Examples of such catalysts have been reported in US Pat. 2,924,593.

The activity of the aforementioned catalysts is extremely low in the polymerisation of ethylene and practically nil in the polymerisation of the higher alpha olefins.

It has now been found unexpectedly that by using in place of the zirconocenes employed until now, compounds of the general formula:

(A') $(C_5R'_nH_{5-n})R''_p(C_5R'_mH_{5-m})ZrX_q$

it is possible to obtain, in combination with trialkyl aluminum compounds or alkyl aluminum monohydrides, catalysts endowed with elevated activity in the (co)polymerization of ethylene and $CH_2=CHR$ alpha olefins where R is an alkyl radical with 1-8 carbon atoms.

The compounds of formula (A') used in the present invention can be prepared according to the methods described in L.A. Paquette - K.J. Moriarty - P. Meuner - B. Gautheron - C. Jornay - R.D. Roger - A.L. Rheingold - Organo-metallics - 8, (1989) 2159.

In the formula A', $(C_5R'_nH_{5-n})$ and $(C_5R'_mH_{5-m})$ are cyclopentadienyl groups, which may also be alike, in which R' is an alkyl, alkenyl, aryl, alkylaryl or arylalkyl group containing from 1 to 20 C-atoms or else a $-CR_2SiR_3$ group or a $-SiR_3$ group with R defined the same as R', or else, two (or four) R' substituents of the same cyclopentadienyl group form a ring having from 4 to 6 carbon atoms; R'' is a bivalent radical chosen from a possibly substituted alkylenic group containing from 1 to 8 carbon atoms, a $>SiR_2$, $>PR$ or $>NR$ group with R defined the same as R', said R'' forming a connecting bridge between two cyclopentadienyl groups; X stands for hydrogen, halogen, -OH,
$-OZr(C_5R'_nH_{5-n})(C_5R'_mH_{5-m})$, -OR with R defined the same as R', or else a hydrocarbon radical having the meaning of R'. In the formula when q is equal to 2, the X substituents may also differ from each other; q is 1 if Zr is trivalent and it is 2 if Zr is tetravalent; p is 0 or 1 and n, m are numbers from 0 to 5; $(n+m)$ is $\geqq 5$ in the case where R' is a hydrocarbon radical and $p = 0$; if $p = 1$, $(n+m)$ is $\geqq 3$: finally, when R' is a $-SiR_3$ or $-CR_2SiR_3$ group, $(n+m)$ is $\geqq 1$ if $p = 0$ or if $p = 1$ and R'' is an alkylenic group; $(n+m)$ is $\geqq 0$ if $p = 1$ and R'' is $>SiR_2$, $>PR$ or $>NR$.

Nonlimiting examples of the A' zirconocenes are:
$[C_5(CH_3)_3H_2]_2ZrCl_2$, $[C_5(CH_3)_4H]_2ZrCl_2$, $[C_5(CH_3)_5]_2ZrCl_2$, $[C_5(CH_3)_5]_2Zr(CH_3)_2$, $[C_5(CH_3)_5]ZrH_2$, $[C_5(CH_3)_5]_2Zr(OCH_3)_2$ $[C_5(CH_3)_5]_2Zr(OH)CL$, $[C_5(CH_3)_5]_2Zr(OH)_2$, $[C_5(CH_3)_5]_2Zr(C_6H_5)_2$, $(C_5(CH_3)_5]_2Zr(CH_3)Cl$, $[C_5(C_2H_5)(CH_3)_4]_2ZrCl_2$, $[C_5(C_6H_5)(CH_3)_4]_2ZrCl_2$, $[C_5(C_2H_5)_5]_2ZrCl_2$, $[C_5(CH_3)_5]_2Zr(C_5H_5)Cl$, $[C_5(CH_3)_5]_2ZrCl$, bis(indenyl)$ZrCl_2$, bis(indenyl)$Zr(CH_3)_2$,ethylene bis(indenyl)$ZrCl_2$, ethylene bis(indenyl)$Zr(CH_3)_2$, $\{C_5[Si(CH_3)_3]H_4\}_2ZrCl_2$, $\{C_5[Si(CH_3)_3]_2H_3\}_2ZrCl_2$, $[C_5(CH_3)_5](C_5H_5)ZrCl_2$, $[C_5(CH_3)_5][C_5(CH_3)H_4]ZrCl_2$, $(CH_3)_2Si(C_5H_4)_2ZrCl_2$, $(CH_3)_2Si[C_5(CH_3)_4]_2ZrCl_2$, $(CH_3)_2C[C_5(CH_3)_4]_2ZrCl_2$, $(CH_3)_2C[C_5(CH_3)_4]$(indenyl)$ZrCl_2$, $(CH_3)_2C(C_5H_4)$ (fluorenyl)$ZrCl_2$.

Particularly suitable compounds are those in which the $(C_5R'_nH_{5-n})$ and $(C_5R'_mH_{5-m})$ groups are pentamethyl-cyclopentadienyl rings or else indenyl groups and the X substituents are chlorine atoms, or else alkyl groups, particularly those with 1 to 5 C-atoms, or else -OH groups.

The trialkyl aluminum compounds or the alkyl aluminum monohydrides can be described by the formula $AlR_{3-z}H_z$ in which R is an alkyl, alkenyl or alkylaryl radical with 1-10 C-atoms and $z = 0$ or 1.

Nonlimiting examples of the alkyl aluminum compounds which may be used are those in which $R_3$ is an alkyl radical with 1-10 carbon atoms. Specific examples are: $Al(CH_3)_3$, $Al(C_2H_5)_3$, $AlH(C_2H_5)_2$, $Al(isoC_4H_9)_3$, $AlH(isoC_4H_9)_2$, $Al(C_6H_5)_3$, $Al(CH_2C_6H_5)_3$, $Al[CH_2C(CH_3)_3]_3$, $Al[CH_2Si(CH_3)_3]_3$, $Al(CH_3)_2(C_2H_5)$, $Al(CH_3)(C_2H_5)_2$, $Al(CH_3)_2(isoC_4H_9)$.

As indicated above, the catalysts according to the invention are suitable for the polymerization of ethylene and $CH_2=CHR$ alpha olefins or their mixtures.

The polymerization is carried out in the liquid phase in the presence of or without an inert hydrocarbon solvent or in the gaseous phase. The polymerization temperature generally ranges from 0 to 150 °C, more particularly from 40 to 80 °C.

The hydrocarbon solvents may be aromatic or aliphatic such as, for example, toluene, hexane, heptane, or chlorinated hydrocarbons such as, for example, $CH_2Cl_2$ or $C_2H_4Cl_2$.

The molecular weight of the polymers can be varied simply by varying the polymerization temperature, the type or concentration of the catalyst components or by using molecular weight regulators such as, for example, hydrogen.

The catalysts according to the invention may also be used on inert supports. This is done by depositing the zirconocene compound or the product of the reaction of the latter with the alkyl aluminum compound or the alkyl aluminum itself on inert supports such as, for example, silica, alumina, styrene-divinyl benzene copolymers or polyethylene.

The solid component thus obtained, if need be, in combination with a further addition of the alkyl aluminum compound, is used advantageously particularly in the polymerization in the gaseous phase.

Particularly attractive results are obtained when the catalyst components are brought into contact with each other prior to the polymerization; the time of contact generally ranges from 1 minute to 1 hour and preferably from 5 to 10 minutes, at concentrations ranging for the zirconocenic compound from $10^{-3}$ to $10^{-8}$ mole/l and for the alkyl aluminum from 10 to $10^{-3}$ mole/l.

The following examples are given as illustrative and nonlimiting versions of the invention.

Example 1

A 1-liter autoclave equipped with a jacket for thermal control, a thermocouple, valves for feeding nitrogen and ethylene, a manometer and a magnetic stirrer made of steel, thermostated at 50 °C, is put under a vacuum after prior evacuation and filling with nitrogen. Then, 1 atm of ethylene and 350 ml of toluene are introduced while maintaining an internal temperature of 50 °C.

In 50 ml of toluene and under a nitrogen atmosphere are reacted 2 mmoles of trimethyl aluminum and 1 mg of $[C_5(CH_3)_5]_2ZrCl_2$. After 5 minutes at ambient temperature, the solution is injected into the autoclave which is then pressurized with ethylene at 4 atm and the polymerization is allowed to proceed for 1 hour at 50 °C while keeping the ethylene pressure constant. Stirring rate: 1100 rpm. The results are shown in Table 1.

Example 2-9

The same operating procedure is followed as in Example 1, while using different alkyl aluminum compounds and different zirconocenes. The compounds employed and the results obtained are shown in Table 1.

Example 10

The same operating procedure is followed as in Example 1, except for the fact that propylene is polymerized. The polymerization temperature is maintained at 23 °C and the amount of dissolved propylene is such as to maintain a pressure of 4 atm.

18 mmoles of $AlMe_3$ and 4.4 mg of racemic ethylene bis(indenyl)$ZrCl_2$, dissolved in toluene, are injected into the autoclave in rapid succession. The polymerization is allowed to proceed at 23 °C for 17 hours. Stirring rate: 1100 rpm.

4.74 g of isotactic polypropylene is obtained:

$(\eta)$inh (THN, 135 °C) = 0.37

$\overline{M}w$ = 29,149

$\overline{M}w/\overline{M}n$ = 4.47

Tm = 134.2 °C

Productivity: 4942 g polymer/g Zr

Table 1 (Examples 1-9)

Conditions: 400 ml toluene, 4 atm, 50°C, 1 hour
Al = 5 mmole/l, components precontacted for 5 min at ambient temperature in the absence of ethylene

| Example No. | Zirconocene | mg Zr | Alkyl Al | gPE | gPE/gZr.h | $\eta_{inh}$ (dl/g) |
|---|---|---|---|---|---|---|
| 1 | $Cp^*_2ZrCl_2$ | 0.211 | $AlMe_3$ | 32.8 | 155,400 | 2.6 |
| 2 | $Cp^*_2ZrCl_2$ | 0.211 | $AlEt_3$ | 29.7 | 140,700 | 5.2 |
| 3 | $Cp^*_2ZrCl_2$ | 0.0211 | $AliBu_3$ | 17.4 | 824,600 | 8.4 |
| 4 | $Cp^*_2ZrCl_2$ | 0.0211 | $AliBu_2H$ | 12.0 | 568,700 | - |
| 5 | $Ind_2ZrCl_2$ | 0.023 | $AlMe_3$ | 5.8 | 252,100 | 4.8 |
| 6 | $Ind_2ZrCl_2$ | 0.023 | $AlEt_3$ | 1.5 | 65,200 | 1.8 |
| 7 | $Cp^*_2ZrMe_2$ | 0.023 | $AlMe_3$ | 9.8 | 426,000 | 3.2 |
| 8 | $Cp^*_2ZrMe_2$ | 0.023 | $AlEt_3$ | 9.4 | 408,700 | 4.7 |
| 9 | $Cp^*_2Zr(OH)_2$ | 0.0212 | $AliBu_3$ | 19.7 | 929,200 | 9.8 |

Note: Me = $-CH_3$

Et = $-CH_2CH_3$

iBu = $-CH_2CH(CH_3)_2$

Cp = cyclopentadienyl

Cp* = pentamethyl cyclopentadienyl

Ind = indenyl

MeCp = methyl cyclopentadienyl

Example 11

The same operating procedure is followed as in Example 10, except for the fact that 200 ml of $CH_2Cl_2$ is used as the solvent in place of toluene.

18 mmoles of $AlMe_3$ and 2 mg of racemic ethylene bis(indenyl)$ZrCl_2$, dissolved in 2 ml of toluene, are injected into the autoclave in rapid succession. The polymerization is allowed to proceed at 23°C for 17 hours. Stirring rate: 1100 rpm.

2.74 g of isotactic polypropylene is obtained.

$\eta$inh(THN, 135°C) = 0.33

Productivity: 6284 g polymer/g Zr.

Comparative Examples 1-4

The same operating procedure is followed as in Example 1, except for the fact that the compounds of zirconium and of alkyl aluminum shown in Table 2 are employed. Table 2 also lists the results obtained.

Table 2 (Comparison Examples 1-4)

Conditions and note as in Table 1.

| Comp. Ex. No. | Zirconocene | mg Zr | Alkyl Al | gPE | gPE/gZr.h | $\eta$i(dl/g) |
|---|---|---|---|---|---|---|
| 1 | $Cp_2ZrCl_2$ | 0.212 | $AlMe_3$ | 8.2 | 38,700 | 2.6 |
| 2 | $Cp_2ZrCl_2$ | 0.212 | $AlEt_3$ | 0.45 | 2,100 | 1.4 |
| 3 | $Cp_2ZrCl_2$ | 0.312 | $AliBu_3$ | 2.15 | 6,900 | - |
| 4 | $(MeCp)_2ZrCl_2$ | 0.028 | $AliBu_3$ | 1.55 | 55,300 | - |

**Claims**

**Claims for the following Contracting States : AT, BE, DE, FR, GB, IT, NL, SE**

1. A catalyst for the polymerization of olefins comprising the product of the reaction between:
A') a zirconocenic compound of the formula

$(C_5R'_nH_{5-n})R''p(C_5R'_mH_{5-m})ZrX_q$

in which $(C_5R'_nH_{5-n})$ and $(C_5R'_mH_{5-m})$ are cyclopentadienyl groups, which may also be identical, and in which R' is an alkyl, alkenyl, aryl, alkylaryl or arylalkyl radical containing from 1 to 20 C-atoms or else a $CR_2SiR_3$ group or $SiR_3$ group with R defined the same as R', or else, two or four R' substituents of the same cyclopentadienyl group form rings having from 4 to 6 C-atoms; R'' is a bivalent radical chosen from an optionally substituted alkenyl group containing from 1 to 8 C-atoms, a $>SiR_2$, $>PR$ or $>NR$ group with R defined the same as R', said R'' forming a connecting bridge between two cyclopentadienyl groups; X stands for hydrogen, halogen, -OH, $-OZr(C_5R'_nH_{5-n})-(C_5R'_mH_{5-m})$, -OR with R defined the same as R', or a hydrocarbon radical having the meaning of R'; when q is equal to 2, the X substituents may also differ from each other; q is 1 if Zr is trivalent and it is 2 if Zr is tetravalent; p is 0 or 1 and n, m are integers from 0 to 5; $(n+m)$ is$\geq$5 in the case where R' is a hydrocarbon radical and $p = 0$; if $p = 1$, $(n+m)$ is$\geq$3; when R' is a $-SiR_3$ or $-CR_2SiR_3$ group $(n+m)$ is$\geq$1 if $p = 0$ or if $p = 1$ and R'' is an alkylenic group; $(n+m)$ is$\geq$0 if $p = 1$ and R'' is $>SiR_2$, $>PR$ or $>NR$,
B') a trialkyl-Al compound or an alkyl-Al monohydride of the formula:

$AlR_{3-z}H_z$

in which R is an alkyl, alkenyl or alkylaryl radical with 1-10 C-atoms and $z = 0$ or 1.

2. A catalyst according to Claim 1, in which the $(C_5R'_nH_{5-n})$ and $(C_5R'_mH_{5-m})$ groups are pentamethyl-cyclopentadienyl rings or indenyl rings and the X substituents are chlorine atoms, -OH groups or alkyl radicals with 1-5 C-atoms.

3. A catalyst according to Claim 2, in which the alkyl-Al compounds are trialkyl-Al compounds and alkyl-Al monohydrides.

4. A catalyst according to claim 1, in which the catalyst component A' and B' are brought into contact with each other in the absence of the monomer before being employed in the polymerization phase.

5. A catalyst according to the claim 2, in which the catalyst components A' and B' or their reaction product are supported on porous inert, inorganic or organic supports.

**Claims for the following Contracting State : ES**

1. A polymerization process of ethylene and α-olefins $CH_2 = CHR$, in which R is an alkyl radical with 1-8 carbon atoms or mixtures of ethylene with said α-olefins in the presence of a catalyst comprising the product of the reaction between:
A') a zirconocenic compound of the formula

$$(C_5R'_nH_{5-n})R''_p(C_5R'_mH_{5-m})ZrX_q$$

in which $(C_5R'_nH_{5-n})$ and $(C_5R'_mH_{5-m})$ are cyclopentadienyl groups, which may also be identical, and in which R' is an alkyl, alkenyl, aryl, alkylaryl or arylalkyl radical containing from 1 to 20 C-atoms or else a $CR_2SiR_3$ group or $SiR_3$ group with R defined the same as R', or else, two or four R' substituents of the same cyclopentadienyl group form rings having from 4 to 6 C-atoms; R'' is a bivalent radical chosen from an optionally substituted alkenyl group containing from 1 to 8 C-atoms, a $>SiR_2$, $>PR$ or $>NR$ group with R defined the same as R', said R'' forming a connecting bridge between two cyclopentadienyl groups; X stands for hydrogen, halogen, -OH, -OZr-$(C_5R'_nH_{5-n})(C_5R'_mH_{5-m})$, -OR with R defined the same as R', or a hydrocarbon radical having the meaning of R'; when q is equal to 2, the X substituents may also differ from each other; q is 1 if Zr is trivalent and it is 2 if Zr is tetravalent; p is 0 or 1 and n, m are integers from 0 to 5; $(n+m)$ is $\geq 5$ in the case where R' is a hydrocarbon radical and $p = 0$; if $p = 1$, $(n+m)$ is$\geq 3$; when R' is a $-SiR_3$ or $-CR_2SiR_3$ group $(n+m)$ is$\geq 1$ if $p = 0$ or if $p = 1$ and R'' is an alkylenic group; $(n+m)$ is$\geq 0$ if $p = 1$ and R'' is $>SiR_2$, $>PR$ or $>NR$;
B') a trialkyl-Al compound or an alkyl-Al monohydride of the formula:

$$AlR_{3-z}H_z$$

in which R is an alkyl, alkenyl or alkylaryl radical with 1-10 C-atoms and $z = 0$ or 1.

2. The polymerization process of claim 1, in which the $(C_5R'_nH_{5-n})$ and $(C_5R'_mH_{5-m})$ groups are pentamethyl-cyclopentadienyl rings or indenyl rings and the X substituents are chlorine atoms, -OH groups or alkyl radicals with 1-5 C-atoms.

3. The polymerization process of claim 2, in which the alkyl-Al compounds are trialkyl-Al compounds and alkyl-Al monohydrides.

4. The polymerization process of claim 1, in which the catalyst components A' and B' are brought into contact with each other in the absence of the monomer before being employed in the polymerization phase.

5. The polymerization process of claim 2, in which the catalyst components A' and B' or their reaction product are supported on porous inert, inorganic or organic supports.

**Patentansprüche**
**Patentansprüche für folgende Vertragsstaaten : AT, BE, DE, FR, GB, IT, NL, SE**

1. Katalysator für die Polymerisation von Olefinen, umfassend das Produkt der Reaktion zwischen
A') einer Zirkonocenverbindung der Formel

$$(C_5R'_nH_{5-n})R''_p(C_5R'_mH_{5-m})ZrX_q$$

worin $(C_5R'_nH_{5-n})$ und $(C_5R'_mH_{5-m})$ Cyclopentadienylgruppen, die auch identisch sein können, sind, und worin R' für einen Alkyl-, Alkenyl-, Aryl-, Alkaryl- oder Aralkylrest mit 1 bis 20 Kohlenstoff-

atomen oder eine Gruppe $CR_2SiR_3$ oder eine Gruppe $SiR_3$, worin R wie für R' definiert ist, steht, oder zwei oder vier R'-Substituenten der gleichen Cyclopentadienylgruppe Ringe mit 4 bis 6 C-Atomen bilden; R'' einen zweiwertigen Rest, ausgewählt unter einer gegebenenfalls substituierten Alkenylgruppe mit 1 bis 8 C-Atomen, einer Gruppe $>SiR_2$, $>PR$ oder $>NR$, worin R wie für R' definiert ist, bedeutet, wobei R'' zwischen den zwei Cyclopentadienylgruppen eine verknüpfende Brücke bildet; X für Wasserstoff, Halogen, -OH, $-OZr(C_5R'_nH_{5-n})(C_5R'_mH_{5-m})$, -OR, worin R wie für R' definiert ist, oder für einen Kohlenwasserstoffrest mit der Bedeutung von R' steht; wenn q 2 bedeutet, die X-Substituenten auch voneinander verschieden sein können; q für 1 steht, wenn Zr dreiwertig ist, und für 2 steht, wenn Zr vierwertig ist; p für 0 oder 1 steht und n, m ganze Zahlen von 0 bis 5 sind; $(n+m) \geqq 5$ ist, wenn R' einen Kohlenwasserstoffrest bedeutet und p = 0; wenn p = 1, $(n+m) \geqq 3$; wenn R' für eine Gruppe $-SiR_3$ oder $-CR_2SiR_3$ steht, $(n+m) \geqq 1$, wenn p = 0 oder wenn p = 1, und R'' eine alkylenische Gruppe bedeutet; $(n+m) \geqq 0$, wenn p = 1 und R'' für $>SiR_2$, $>PR$ oder $>NR$ steht,

B') einer Trialkyl-Al-Verbindung oder einem Alkyl-Al-Monohydrid der Formel:

$$AlR_{3-z}H_z$$

worin R für einen Alkyl-, Alkenyl- oder Alkarylrest mit 1 bis 10 C-Atomen steht und z = 0 oder 1.

**2.** Katalysator gemäß Anspruch 1, worin die Gruppen $(C_5R'_nH_{5-n})$ und $(C_5R'_mH_{5-m})$ Pentamethyl-cyclopentadienylringe oder Indenylringe sind und die X-Substituenten Chloratome, Gruppen -OH oder Alkylreste mit 1 bis 5 C-Atomen wiedergeben.

**3.** Katalysator gemäß Anspruch 2, worin die Alkyl-Al-Verbindungen Trialkyl-Al-Verbindungen und Alkyl-Al-Monohydride sind.

**4.** Katalysator gemäß Anspruch 1, worin die Katalysatorkomponente A' und B' miteinander in Abwesenheit des Monomeren vor der Verwendung in der Polymerisationsphase in Kontakt gebracht werden.

**5.** Katalysator gemäß Anspruch 2, worin die Katalysatorkomponenten A' und B' oder ihr Reaktionsprodukt auf einen porösen inerten, anorganischen oder organischen Träger aufgebracht werden.

**Patentansprüche für folgenden Vertragsstaat : ES**

**1.** Verfahren zur Polymerisation von Ethylen und α-Olefinen $CH_2=CHR$, worin R ein Alkylrest mit 1 bis 8 Kohlenstoffatomen ist, oder von Mischungen des Ethylens mit diesen α-Olefinen in Gegenwart eines Katalysators, der das Reaktionsprodukt umfaßt zwischen

A') einer Zirkonocenverbindung der Formel

$$(C_5R'_nH_{5-n})R''_p(C_5R'_mH_{5-m})ZrX_q$$

worin $(C_5R'_nH_{5-n})$ und $(C_5R'_mH_{5-m})$ Cyclopentadienylgruppen, die auch identisch sein können, sind, und worin R' für einen Alkyl-, Alkenyl-, Aryl-, Alkaryl- oder Aralkylrest mit 1 bis 20 Kohlenstoffatomen oder eine Gruppe $CR_2SiR_3$ oder eine Gruppe $SiR_3$, worin R wie für R' definiert ist, steht, oder zwei oder vier R'-Substituenten der gleichen Cyclopentadienylgruppe Ringe mit 4 bis 6 C-Atomen bilden; R'' einen zweiwertigen Rest, ausgewählt unter einer gegebenenfalls substituierten Alkenylgruppe mit 1 bis 8 C-Atomen, einer Gruppe $>SiR_2$, $>PR$ oder $>NR$, worin R wie für R' definiert ist, bedeutet, wobei R'' zwischen den zwei Cyclopentadienylgruppen eine verknüpfende Brücke bildet; X für Wasserstoff, Halogen, -OH, $-OZr(C_5R'_nH_{5-n})(C_5R'_mH_{5-m})$, -OR, worin R wie für R' definiert ist, oder für einen Kohlenwasserstoffrest mit der Bedeutung von R' steht; wenn q 2 bedeutet, die X-Substituenten auch voneinander verschieden sein können; q für 1 steht, wenn Zr dreiwertig ist, und für 2 steht, wenn Zr vierwertig ist; p für 0 oder 1 steht und n, m ganze Zahlen von 0 bis 5 sind; $(n+m) \geqq 5$ ist, wenn R' einen Kohlenwasserstoffrest bedeutet und p = 0; wenn p = 1, $(n+m) \geqq 3$; wenn R' für eine Gruppe $-SiR_3$ oder $-CR_2SiR_3$ steht, $(n+m) \geqq 1$, wenn p = 0 oder wenn p = 1, und R'' eine alkylenische Gruppe bedeutet; $(n+m) \geqq 0$, wenn p = 1 und R'' für $>SiR_2$, $>PR$ oder $>NR$ steht,

B') einer Trialkyl-Al-Verbindung oder einem Alkyl-Al-Monohydrid der Formel:

$AlR_{3-z}H_z$

worin R für einen Alkyl-, Alkenyl- oder Alkarylrest mit 1 bis 10 C-Atomen steht und z = 0 oder 1.

**2.** Polymerisationsverfahren gemäß Anspruch 1, worin die Gruppen $(C_5R'_nH_{5-n})$ und $(C_5R'_mH_{5-m})$ Pentamethyl-cyclopentadienylringe oder Indenylringe sind und die X-Substituenten Chloratome, Gruppen -OH oder Alkylreste mit 1 bis 5 C-Atomen wiedergeben.

**3.** Polymerisationsverfahren gemäß Anspruch 2, worin die Alkyl-Al-Verbindungen Trialkyl-Al-Verbindungen und Alkyl-Al-Monohydride sind.

**4.** Polymerisationsverfahren gemäß Anspruch 1, worin die Katalysatorkomponenten A' und B' miteinander in Abwesenheit des Monomeren vor der Verwendung in der Polymerisationsphase in Kontakt gebracht werden.

**5.** Polymerisationsverfahren gemäß Anspruch 2, worin die Katalysatorkomponenten A' und B' oder ihr Reaktionsprodukt auf einen porösen inerten, anorganischen oder organischen Träger aufgebracht werden.

**Revendications pour les Etats contractants suivants : AT, BE, DE, FR, GB, IT, NL, SE**

**1.** Un catalyseur de polymérisation d'oléfines comprenant le produit de la réaction entre:
A') un composé zirconocène de formule:

$(C_5R'_nH_{5-n})R''_p(C_5R'_mH_{5-m})ZrX_q$

dans laquelle:
$(C_5R'_nH_{5-n})$ et $(C_5R'_mH_{5-m})$ sont des radicaux cyclopentadiényles qui peuvent être identiques,
et dans laquelle:

- R' est un radical alkyle, alkenyle, aryle, alkylaryle ou arylalkyle contenant de 1 a 20 atomes de carbone ou encore un groupe $CR_2SiR_3$ ou $SiR_3$ dans lequel R a la même signification que R', ou encore, deux ou quatre des substituants R' du même radical cyclopentadiényle forment des cycles comportant de 4 à 6 atomes de carbone;
- R'' est un radical bivalent choisi dans le groupe comprenant le radical alkényle éventuellement substitué contenant de 1 a 8 atomes de carbone, ou un groupe $>SiR_2$, $>PR$ ou $>NR$ dans lequel R a la même signification que R', le groupe R'' formant un pont entre les deux radicaux cyclopentadiényles;
- X étant un atome d'hydrogène ou d'halogène, ou un groupe -OH, $-OZr(C_5R'_nH_{5-n})(C_5R'_mH_{5-m})$ ou -OR dans lesquels R a la même signification que R', ou un radical hydrocarboné ayant la même signification que R',

étant entendu que:
lorsque q = 2, les substituants X peuvent être différents,
q = 1, quand Zr est trivalent et
q = 2 quand Zr est tétravalent,
p = 0 ou 1 et n et m sont des nombres entiers compris entre 0 et 5;
(n + m) est ≧ 5 dans le cas où R' est un radical hydrocarboné et p = 0;
si p = 1, (n + m) est ≧ 3;
quand R' est un groupe $-SiR_3$ ou $-CR_2SiR_3$, (n + m) est ≧ 1 si p = 0 ou si p = 1 et R'' est un radical alkylène;
(n + m) est ≧ 0 si p = 1 et R'' est $>SiR_2$, $>PR$ ou $>NR$;
B') un composé Al-trialkyle ou un monohydrure de Al-alkyle de formule:

$AlR_{3-z}H_z$

dans laquelle:

R est un radical alkyle, alkényle ou alkylaryle comportant 1 a 10 atomes de carbone; et
z = 0 ou 1.

2. Le catalyseur selon la revendication 1, dans lequel les groupes ($C_5R'_nH_{5-n}$) et ($C_5R'_mH_{5-m}$) sont des cycles pentaméthyl-cyclopentadiényle ou indényle et les substituants X sont des atomes de chlore, des groupes OH ou des radicaux alkyles comportant 1 a 5 atomes de carbone.

3. Le catalyseur selon la revendication 2, dans lequel les composés Al-alkyles sont des composés Al-trialkyles ou des monohydrures de Al-alkyle.

4. Le catalyseur selon la revendication 1, dans lequel les constituants du catalyseur A' et B' sont mis en contact entre eux, en l'absence du monomère, avant d'être employés dans la phase de polymérisation.

5. Le catalyseur selon la revendication 2, dans lequel les constituants du catalyseur A' et B' ou leur produit de réaction sont fixés sur des supports poreux inertes, inorganiques ou organiques.

**Revendications pour l'Etat contractant suivant : ES**

1. Un procédé de polymérisation d'éthylène et d'α-oléfines $CH_2=CHR$, dans lequel R est un radical alkyle comprenant 1 a 8 atomes de carbone ou des mélanges d'éthylène avec lesdites α-oléfines en présence d'un catalyseur comprenant le produit de la réaction entre:
A') un composé zirconocène de formule:

$$(C_5R'_nH_{5-n})R''_p(C_5R'_mH_{5-m})ZrX_q$$

dans laquelle:
($C_5R'_nH_{5-n}$) et ($C_5R'_mH_{5-m}$) sont des radicaux cyclopentadiényles qui peuvent être identiques,
et dans laquelle:
R' est un radical alkyle, alkényle, aryle, alkylaryle ou arylalkyle contenant de 1 a 20 atomes de carbone ou encore un groupe $CR_2SiR_3$ ou $SiR_3$ dans lequel R a la même signification que R', ou encore, deux ou quatre des substituants R' du même radical cyclopentadiényle forment des cycles comportant de 4 à 6 atomes de carbone;
R'' est un radical bivalent choisi dans le groupe comprenant le radical alkényle éventuellement substitué contenant de 1 a 8 atomes de carbone, ou un groupe $>SiR_2$, $>PR$ ou $>NR$ dans lequel R a la même signification que R', le groupe R'' formant un pont entre les deux radicaux cyclopentadiényles;
X étant un atome d'hydrogène ou d'halogène, ou un groupe -OH, -OZr($C_5R'_nH_{5-n}$)-($C_5R'_mH_{5-m}$) ou -OR dans lesquels R a la même signification que R', ou un radical hydrocarboné ayant la même signification que R',
étant entendu que:
lorsque q = 2, les substituants X peuvent être différents,
q = 1, quand Zr est trivalent et
q = 2 quand Zr est tétravalent,
p = 0 ou 1 et n et m sont des nombres entiers compris entre 0 et 5;
(n+m) est ≧ 5 dans le cas où R' est un radical hydrocarboné et p = 0;
si p = 1, (n+m) est ≧ 3;
quand R' est un groupe $-SiR_3$ ou $-CR_2SiR_3$, (n+m) est ≧ 1 si p = 0 ou si p = 1 et R'' est un radical alkylène;
(n+m) est ≧ 0 si p = 1 et R'' est $>SiR_2$, $>PR$ ou $>NR$;
B') un composé Al-trialkyle ou un monohydrure de Al-alkyle de formule:

$$AlR_{3-z}H_z$$

dans laquelle:
R est un radical alkyle, alkényle ou alkylaryle comportant 1 a 10 atomes de carbone; et
z = 0 ou 1.

2. Le procédé de polymérisation selon la revendication 1, dans lequel les groupes ($C_5R'_nH_{5-n}$) et ($C_5R'_mH_{5-m}$) sont des cycles pentaméthyl-cyclopentadiényle ou indényle et les substituants X sont des atomes de chlore, des groupes OH ou des radicaux alkyles comportant 1 a 5 atomes de carbone.

3. Le procédé de polymérisation selon la revendication 2, dans lequel les composés Al-alkyles sont des composés Al-trialkyles ou des monohydrures de Al-alkyle.

4. Le procédé de polymérisation selon la revendication 1, dans lequel les constituants du catalyseur A' et B' sont mis en contact entre eux, en l'absence du monomère, avant d'être employés dans la phase de polymérisation.

5. Le procédé de polymérisation selon la revendication 2, dans lequel les constituants du catalyseur A' et B' ou leur produit de réaction sont fixés sur des supports poreux inertes, inorganiques ou organiques.